# EUROPEAN PATENT APPLICATION

(11) **EP 1 879 336 A1**
(43) Date of publication of application: **16.01.2008**
(21) Application number: 06756681.0
(22) Date of filing: 29.05.2006
(51) Int. Cl.: H04L 12/56, H04Q 7/38

(54) **PACKET RELAY APPARATUS, MULTICAST PACKET COMMUNICATION SYSTEM, AND MULTICAST PACKET COMMUNICATION METHOD**

(30) Priority: 30.05.2005 JP 2005157451
(71) Applicant: MATSUSHITA ELECTRIC INDUSTRIAL CO., LTD., Osaka 571-8501 (JP)
(72) Inventor: FUKUI, Akito c/o Matsushita El.Ind.Co.Ltd., IPD Ctr., Chuo-ku, Osaka 540-6207 (JP)
(74) Representative: Zimmer, Franz-Josef
(86) International application number: PCT/JP2006/310636
(87) International publication number: WO 2006/129586

(57) **Abstract**

A packet relay apparatus, a multicast packet communication system and a multicast packet communication method wherein even when a single service is constituted by a plurality of MBMS data streams, the radio networks and the network resources can be effectively used. Each of relay apparatuses of GGSN (120), SGSN (130) and RNC (140) stores a service identifier, which identifies a service requested by a UE (150), an associated group ID, which identifies the radio access system of the UE (150), and an associated RTP port number corresponding to the group ID. Each relay apparatus transfers, based on the stored IP multicast address, group ID and RTP port number, only an MBMS data stream, which is requested by the UE (150), among MBMS data streams transmitted from a BM-SC (110) and addressed to the UE (150).

## Description

### Technical Field

The present invention relates to a packet relay apparatus, multicast packet communication system and multicast packet communication method that provide multicast packet communication.

### Background Art

In recent years, in the field of mobile communication, multimedia broadcast/multicast service (hereinafter "MBMS") has been technically studied. MBMS is not one-to-one communication but is one-to-many communication where one base station apparatus transmits the same data (for example, music data and video image data) to a plurality of communication terminal apparatuses at the same time.

Advantages of MBMS include the following: That is, in streaming service or the like, when communication terminal apparatuses receive information transmitted from a base station apparatus using one dedicated channel each, load on the radio link increases if the number of communication terminal apparatuses that desire to receive that information increases. However, if MBMS is used, even if the number of communication terminal apparatuses increases, all these communication terminal apparatuses receive information using the same channel, so that it is possible to increase the number of communication terminal apparatuses that can receive information without increasing load on the radio link. At present, services using MBMS include traffic information distribution, music distribution, news distribution at railroad stations and distribution of live sports broadcasting.

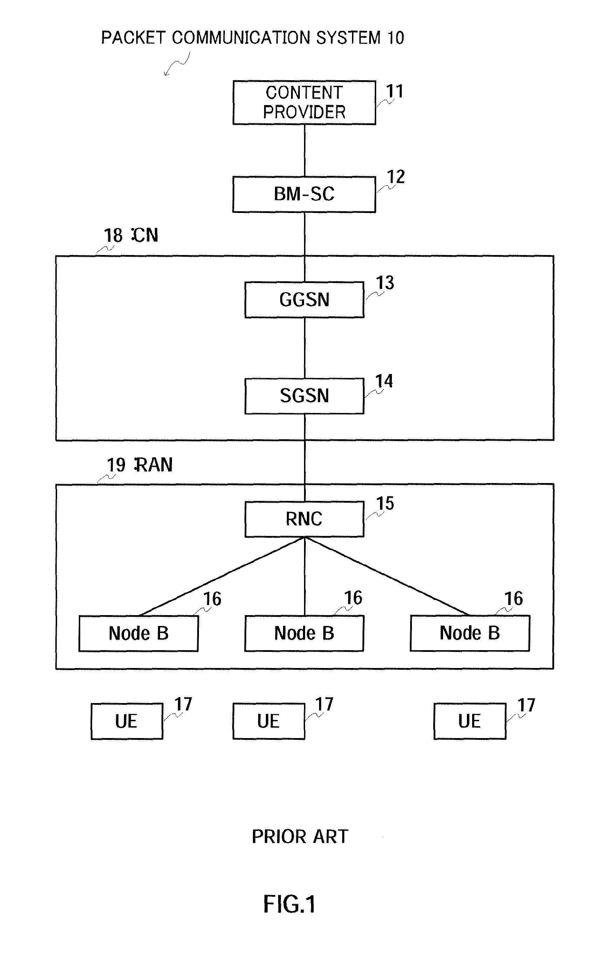

FIG.1 is a configuration diagram of packet communication system 10 that provides MBMS. MBMS packet communication system 10 is configured with content provider 11, BM-SC (Broadcast/Multicast Service Center) 12, GGSN 13, SGSN 14, base station control station apparatus (hereinafter "RNC") 15, base station apparatus (hereinafter "Node B") 16 and communication terminal apparatus (hereinafter "UE") 17.

Further, GGSN 13 and SGSN 14 configure core network (hereinafter "CN") 18, and RNC 15 and Node B 16 configure radio access network (hereinafter "RAN") 19.

Content provider 11 provides content through MBMS to BM-SC 12 as MBMS data.

BM-SC 12 issues commands to GGSN 13 and transfers to GGSN 13 MBMS data provided from content provider 11.

GGSN 13 sets a bearer plane for transferring MBMS data between GGSN 13 and SGSN 14 according to commands from BM-SC 12.

SGSN 14 performs MBMS control (for example, "MBMS multicast service activation", "MBMS session start request", "MBMS registration and MBMS session stop") for each user and transfers MBMS data to RNC 15.

For efficient transfer of MBMS data, RNC 15 duplicates MBMS data transferred from SGSN 14 and transfers the duplicated MBMS data to Node B 16.

Node B 16 radio transmits the MBMS data transferred from RNC 15 to UE 17 from a radio interface using a common channel. Public network is utilized for data transfer between RNC 15 and Node B 16.

UE 17 performs MBMS bearer service control and receives MBMS data radio transmitted from Node B 16.

In this way, content provided by content provider 11 is transmitted as MBMS data to a plurality of UE 17 under Node B 16 at the same time.

By the way, there are cases where one service is formed with a plurality of MBMS data streams. For example, these cases include a case of transmitting image and speech using different MBMS data streams and a case of encoding speech to a base layer stream and an enhancement layer stream and transmitting the base layer stream and enhancement layer stream using different MBMS data streams.

To be more specific, a case is possible where multicast service is identified according to an IP multicast address and this multicast service is formed with a plurality of RTP (Real-time Transport Protocol) streams. In this case, audio and video are likely to be transferred using different RTP streams and transferred utilizing the same IP multicast address.
Non-Patent Document 1: 3GPP TS 23.246 V.6.2.0 (2004-03) Multimedia Broadcast/Multicast Service (MBMS); Architecture and functional description(Release 6)

### Disclosure of Invention

### Problems to be Solved by the Invention

However, when one service is formed with a plurality of MBMS data streams, with the above-described multicast packet communication method in a system configuration that provides MBMS, it is not possible to transfer only MBMS data streams corresponding to streams desired by a terminal, and unnecessary MBMS data is distributed to the radio link and network. Therefore, radio link and network resources cannot be effectively utilized.

It is an object of the present invention to provide a packet relay apparatus, multicast packet communication system and multicast packet communication method that enable efficient use of radio link and network resources even when one service is formed with a plurality of MBMS data streams.

### Means for Solving the Problem

The packet relay apparatus of the present invention adopts a configuration including: a controlling section that receives a stream identifier that identifies a data stream requested from a communication terminal apparatus performing multicast packet communication; and a selecting section that receives data streams transmitted from an upper apparatus, selects the data stream requested by the communication terminal apparatus out of the received data streams based on the stream identifier, and transfers the selected data stream to a lower apparatus.

The multicast packet communication system of the present invention adopts a configuration including: a communication terminal apparatus that requests a desired service using a service identifier that identifies a service and a stream identifier that identifies a data stream; and a packet relay apparatus that transfers a data stream requested by the communication terminal apparatus to a lower apparatus based on the stream identifier, out of a plurality of data streams transmitted from an upper apparatus.

According to these configurations, out of data streams received from an upper apparatus, a data stream requested by the communication terminal apparatus is transferred to a lower apparatus, so that it is possible to avoid transfer of data streams which are not requested by the communication terminal apparatus, and enable efficient use of radio link and network resources.

The multicast packet communication method of the present invention includes the steps of: requesting a desired service from a communication terminal apparatus using a service identifier that identifies a service and a stream identifier that identifies a data stream; and transferring from a packet relay apparatus to a lower apparatus a data stream requested by the communication terminal apparatus out of a plurality of data streams transmitted from an upper apparatus.

According to this method, out of the data streams received from an upper apparatus, a data stream requested by the communication terminal apparatus is transferred to a lower apparatus, so that it is possible to avoid transfer of data streams which are not requested by the communication terminal apparatus, and enable efficient use of radio link and network resources.

### Advantageous Effect of the Invention

According to the present invention, it is possible to use radio link and network resources efficiently even when one service is formed with a plurality of MBMS data streams.

### Brief Description of Drawings

FIG.1 is a configuration diagram of a packet communication system providing MBMS;
FIG.2 is a block diagram showing a configuration of a multicast packet communication system according to Embodiment 1 of the present invention;
FIG.3 shows a table that stores correspondence relationships between IP multicast addresses and group IDs;
FIG.4 is a sequence diagram showing control steps in the multicast packet communication system shown in FIG.2;
FIG.5 illustrates a "service announcement";
FIG.6 illustrates a "joining message" and MBMS notification request;
FIG.7 illustrates an "MBMS UE linking request";
FIG.8 illustrates a "session start request";
FIG.9 is a conceptual diagram showing an MBMS data stream flow in the multicast packet communication system shown in FIG.2;
FIG.10 illustrates a "service announcement", "joining message" and "MBMS notification request";
FIG.11 illustrates an "MBMS UE linking request";
FIG.12 illustrates a "session start request"; and
FIG.13 illustrates a "service announcement" associating a TMGI with an RTP port number of each group ID.

### Best Mode for Carrying Out the Invention

Embodiments of the present invention will be described in detail below with reference to the accompanying drawings.

### (Embodiment 1)

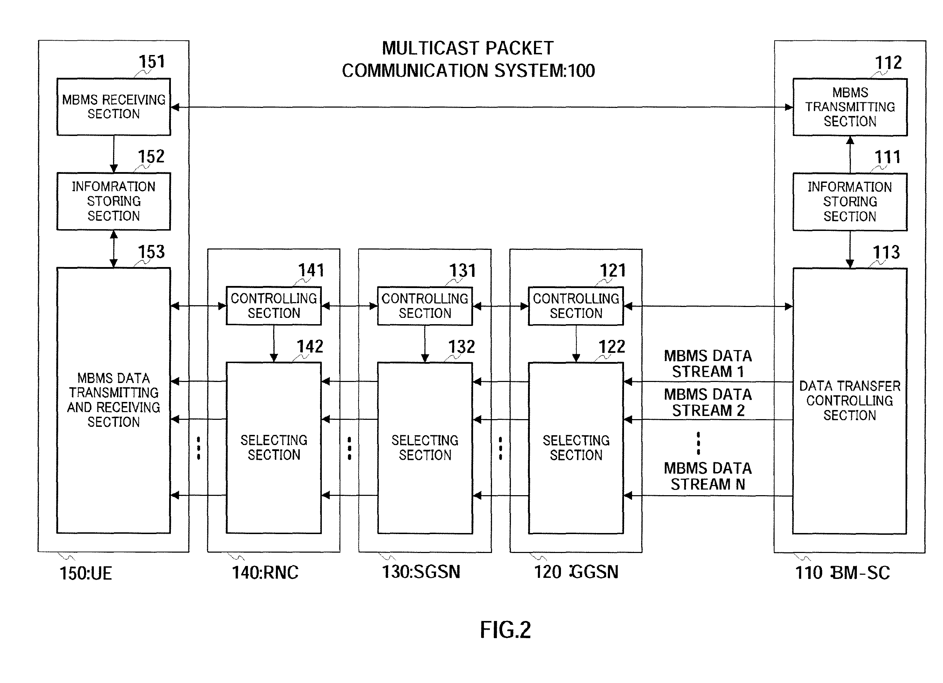

FIG.2 is a block diagram showing a configuration of multicast packet communication system 100 according to Embodiment 1 of the present invention. First, BM-SC (Broadcast/Multicast Service Center) 110 will be described. Information storing section 111 stores multicast service content provided by BM-SC 110, IP multicast address as a service identifier that identifies a service, group ID and TMGI (Temporary Mobile Group Identity) in association with one another.

Here, the group ID is an identifier identifying UE capabilities. UE capabilities include UE radio access schemes such as the second generation, third generation and fourth generation mobile wireless communication systems, as commonly referred to as. Further, UE capabilities include functions of playing back video streams and audio streams. UE capabilities also include a data rate, the number of channels, buffer amount, access mode (FDD and TDD), frequency band, header compression function and encryption function of a UE, defined as UE radio access capabilities of the communication terminal apparatus in "UE Capability Information" in3GPPTS25.311. Furthermore, a TMGI is a replacement of an IP multicast address having a long bit length in a shorter bit length, and enables efficient use of radio resources.

MBMS transmitting section 112 reads multicast service content, IP multicast address and group ID stored in information storing section 111, and transmits the read information to UE 150 (i.e. "service announcement") .

Data transfer controlling section 113 receives MBMS data from a content provider (not shown) and reads the TMGI corresponding to the IP multicast address included in the received MBMS data, group ID and RTP port number as a stream identifier that identifies an MBMS data stream, from information storing section 111. To start multicast packet communication, data transfer controlling section 113 outputs a control signal (i.e. "session start request") including the read TMGI, group ID and RTP port number to GGSN 120.

In response ta an inquiry (i.e. "MBMS registration request") from GGSN 120 as to the TMGI corresponding to the IP multicast address, data transfer controlling section 113 outputs a control signal including the TMGI to GGSN 120 (i.e. "MBMS registration response").

Further, data transfer controlling section 113 transfers the MBMS data received from the content provider to GGSN 120.

Next, GGSN 120 will be described. Controlling section 121 transmits/receives control signals from/to UE 150, BM-SC 110 and SGSN 130, and controls selecting section 122. To be more specific, the following processing is performed.

Controlling section 121 receives an IP multicast address and group ID from UE 150 (i.e. "joining") and outputs the received IP multicast address and group ID to selecting section 122.

Further, controlling section 121 performs multicast service activation processing on SGSN 130 and outputs a control signal including an IPmulticast address and group ID to SGSN 130 (i.e. "MBMS notification request", "create MBMS context request" and "create MBMS context response").

Furthermore, controlling section 121 inquires BM-SC 110 as to the TMGI corresponding to the IP multicast address (i.e. "MBMS registration request"), and receives the TMGI corresponding to the IP multicast address from BM-SC 110 (i.e. "MBMS registration response").

Controlling section 121 commands selecting section 122 to select only the MBMS data corresponding to the TMGI and group ID to be used.

Further, in response to the inquiry (i.e. "MBMS registration request") from SGSN 130 as to the TMGI corresponding to the IP multicast address, controlling section 121 outputs a control signal including the corresponding TMGI (i.e. "MBMS registration response").

Controlling section 121 receives a control signal (i.e. "session start request") from BM-SC 110 which includes the TMGI, group ID and RTP port number and which indicates a start of multicast packet communication, and outputs the received "session start request" to SGSN 130.

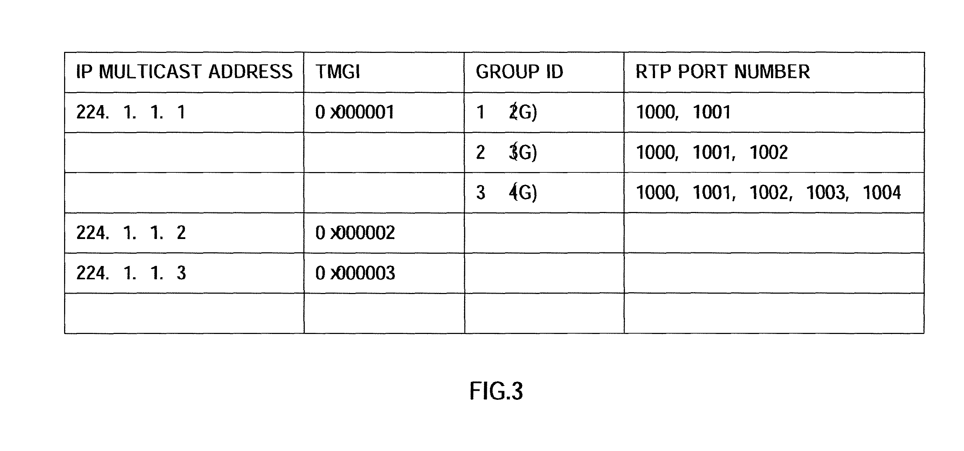

As shown in FIG.3, selecting section 122 has a table that stores correspondence relationships between IP multicast addresses and group IDs. When the IP multicast address and group ID outputted from controlling section 121 are new and not stored in the table, selecting section 122 stores these IP multicast address and group ID in the table.

Further, when the IP multicast address is a new address, selecting section 122 receives the TMGI corresponding to the IP multicast address via controlling section 121 and stores the received TMGI in the table.

Furthermore, selecting section 122 before receiving MBMS data, receives RTP port numbers corresponding to the TMGI and group ID from BM-SC 110 via controlling section 121 and stores only the RTP port numbers corresponding the group ID stored in the table.

Upon receiving MBMS data, selecting section 122 selects MBMS data corresponding to the RTP port numbers stored in the table and transmits only the selected MBMS data to SGSN 130.

Next, SGSN 130 will be described. Controlling section 131 transmits/receives control signals from/to UE 150, GGSN 120 andRNC 140, and controls selecting section 132. To be more specific, the following processing is performed.

When multicast service activation processing is performed by GGSN 120, controlling section 131 outputs a control signal including an IP multicast address to UE 150 (i.e. "request MBMS context activation").

Further, controlling section 131 inquires GGSN 120 as to the TMGI corresponding to the IPmulticast address (i.e. "MBMS registration request") and receives the TMGI corresponding to the IP multicast address from GGSN 120 (i.e. "MBMS registration response").

Further, controlling section 131 commands selecting section 132 to select only the MBMS data corresponding to the TMGI and group ID to be used.

Furthermore, controlling section 131 receives a "session start request" from GGSN 120 and outputs the received "session start request" to RNC 140.

Selecting section 132 is the same as selecting section 122 of GGSN 120 and therefore will not be described in detail.

Next, RNC 140 will be described. Controlling section 141 transmits/receives control signals from/to UE 150 and SGSN 130 and controls selecting section 142. To be more specific, the following processing is performed.

Controlling section 141 receives the group ID corresponding to the TMGI from SGSN 130 (i.e. "MBMS UE linking request").

Further, controlling section 141 commands selecting section 142 to select only the MBMS data corresponding to the TMGI and group ID to be used.

Furthermore, controlling section 141 receives a "session start request" from SGSN 130 and outputs a control signal including the TMGI included in the received "session start request" to UE 150 (i.e. "notification") .

Selecting section 142 is similar to selecting section 122 of GGSN 120 and therefore will not be described in detail.

Next, UE 150 will be described. MBMS receiving section 151 receives the multicast service content, IP multicast address and group ID transmitted from BM-SC 110 and outputs these received information to information storing section 152.

Information storing section 152 stores the multicast service content, IP multicast address and group ID outputted from MBMS receiving section 151 and the TMGI in association with one another.

MBMS data transmitting and receiving section 153 outputs a control signal including the IP multicast address and group ID corresponding to the multicast service which is desired to be received, to GGSN 120 (i.e. "joining").

Further, MBMS data transmitting and receiving section 153 performs multicast service activation processing between MBMS data transmitting and receiving section 153 and SGSN 130, receives the TMGI corresponding to the IP multicast address from SGSN 130 and outputs the received TMGI to information storing section 152 (i.e. "request MBMS context activation", "activate MBMS context request", "activate MBMS context accept").

Further, MBMS data transmitting and receiving section 153 receives a control signal (i.e. "notification") indicating a start of MBMS data transfer from RNC 140 and receives the MBMS data from Node B (not shown) based on the TMGI corresponding to the IP multicast address stored in information storing section 152.

In FIG.2, MBMS transmitting section 112 of BM-SC 110 and MBMS receiving section 151 of UE 150 are directly connected. However, actually, MBMS transmitting section 112 of BM-SC 110 and MBMS receiving section 151 of UE 150 are connected via GGSN 120, SGSN 130, RNC 140 and Node B.

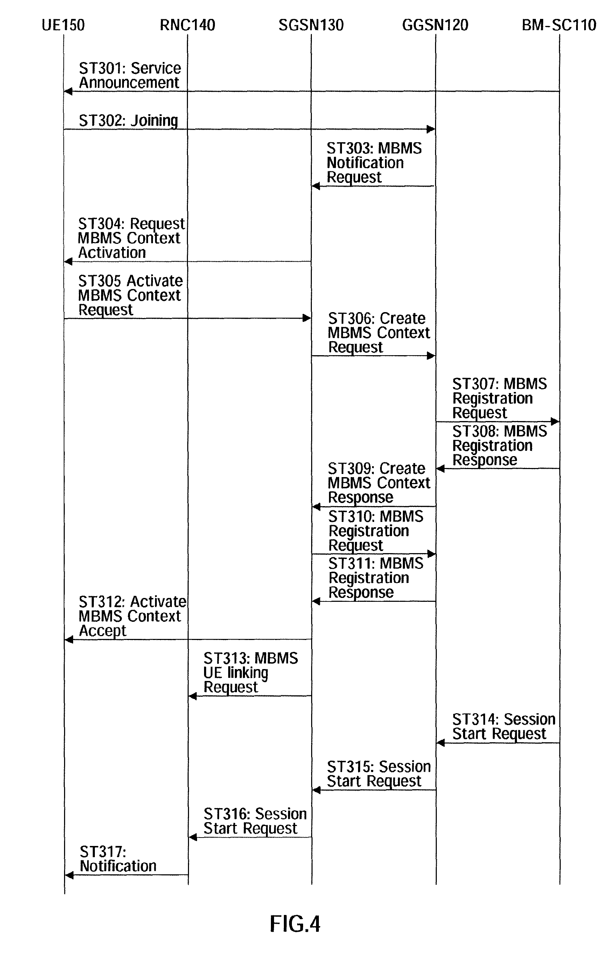

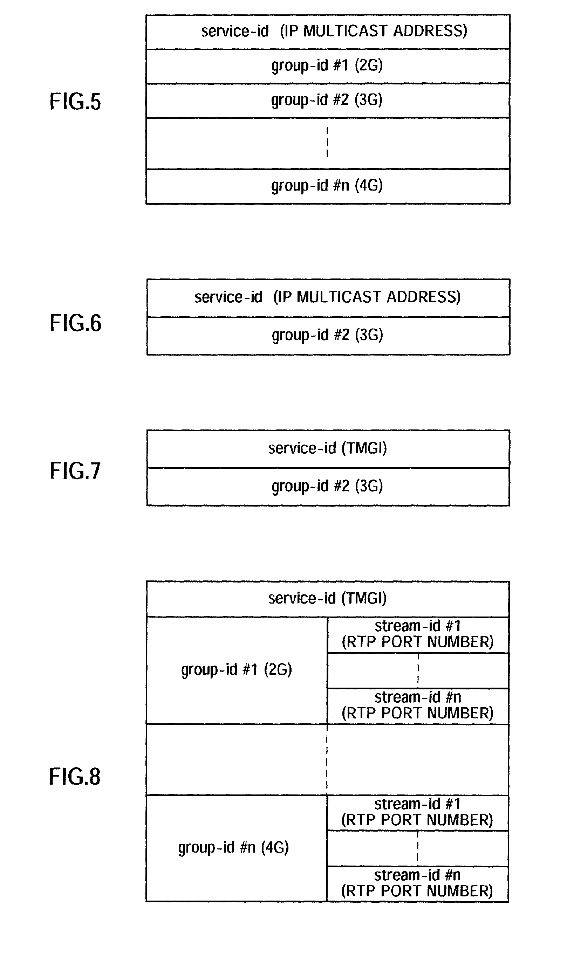

Next, control steps in above-describedmulticast packet communication system 100 will be described using FIG.4. In FIG.4, in ST301, a "service announcement" is transmitted from MBMS transmitting section 112 of BM-SC 110, and multicast service is reported to UE 150. In the "service announcement", the multicast service content, IPmulticast addresses and group IDs stored in information storing section 111 of BM-SC 110 are set, and, as shown in FIG.5, the IP multicast addresses and the group IDs are associated.

UE 150 stores the IP multicast address and group ID which UE 150 desires to receive, out of the IP multicast addresses and group IDs included in the received "service announcement", in information storing section 152.

In ST302, upon receiving multicast service, MBMS data transmitting and receiving section 153 of UE 150 transmits a "joining message" including the IP multicast address and group ID corresponding to the multicast service which UE 150 desires to receive and the MBMS data stream. In the "joining message", IP multicast address and group ID of UE 150 are set, and, as shown in FIG.6, the IP multicast address is associated with the group ID of UE 150. Selecting section 122 of GGSN 120 stores the IP multicast address and group ID included in the received "joining message".

In ST303, GGSN 120 transmits an "MBMS notification request" including an IP multicast address and group ID to SGSN 130 and reports that UE 150 joins the multicast service. As shown in FIG.6, in the "MBMS notification request", the IP multicast address and the group ID of UE 150 are associated. Selecting section 132 of SGSN 130 stores the IP multicast address and group ID included in the received "MBMS notification request".

In ST304, controlling section 131 of SGSN 130 transmits a "request MBMS context activation" including the IP multicast address, to UE 150, to request activation of multicast service to MBMS data transmitting and receiving section 153 of UE 150.

In ST305, MBMS data transmitting and receiving section 153 of UE 150 transmits an "activate MBMS context request" including the IP multicast address to controlling section 131 of SGSN 130, to acquire the TMGI required for data transfer.

In ST306, when the TMGI corresponding to the IP multicast address included in the received "activate MBMS context request" is not stored in selecting section 132, controlling section 131 of SGSN 130 transmits a "create MBMS context request" including the IP multicast address to request activation of the multicast service to controlling section 121 of GGSN 120.

In ST307, when the TMGI corresponding to the IP multicast address included in the received "create MBMS context request" is not stored in selecting section 122, controlling section 121 of GGSN 120 transmits an "MBMS registration request" including the IP multicast address to data transfer controlling section 113 of BM-SC 110.

In ST308, data transfer controlling section 113 of BM-SC 110 searches information storing section 111 for the TMGI corresponding to the IP multicast address included in the received "MBMS registration request", sets the searched TMGI in an "MBMS registration response" and transmits the result to controlling section 121 of GGSN 120.

Selecting section 122 of GGSN 120 stores a correspondence relationship between the IP multicast address included in the "MBMS registration request" and the TMGI included in the "MBMS registration response".

In ST309, controlling section 121 of GGSN 120 reports to SGSN 130 that activation of the multicast service corresponding to the IP multicast address set in the "create MBMS context request" is completed at GGSN 120 using the "create MBMS context response".

In ST310, when the TMGI corresponding to the IP multicast address included in the "activate MBMS context request" is not stored in selecting section 132, controlling section 131 of SGSN 130 transmits an "MBMS registration request" including the IP multicast address to controlling section 121 of GGSN 120.

In ST311, controlling section 121 of GGSN 120 searches for the TMGI from the IP multicast addresses and the TMGI stored in selecting section 122, sets the searched TMGI in an "MBMS registration response" and transmits the "MBMS registration response" to controlling section 131 of SGSN 130.

Selecting section 131 of SGSN 130 stores a correspondence relationship between the IP multicast address included in the "MBMS registration request" and the TMGI included in the "MBMS registration response".

In ST312, SGSN 130 transmits to UE 150 an "activate MBMS context accept" including the TMGI corresponding to the IP multicast address which is included in the "activate MBMS context request".

In ST313, controlling section 131 of SGSN 130 transmits an "MBMS UE linking request" including the TMGI and group ID corresponding to the IP multicast address and reports to RNC 140 that UE 150 joins the multicast service. As shown in FIG.7, in the "MBMS UE linking request", the TMGI and the group ID of UE 150 are associated. Selecting section 142 of RNC 140 stores the TMGI and group ID included in the received "MBMS UE linking request".

In ST314, data transfer controlling section 113 of BM-SC 110 starts multicast packet communication and transmits a "session start request" including the TMGI, group ID and RTP port number which should be selected for the group ID, to GGSN 120.

In ST315, controlling section 121 of GGSN 120 transmits the "session start request" transmitted from data transfer controlling section 113 of BM-SC 110 to SGSN 130. In ST316, controlling section 131 of SGSN 130 transmits the "session start request" transmitted from controlling section 121 of GGSN 120 to RNC 140. As shown in FIG.8, in the "session start request", the TMGI and the RTP port number of each group ID are associated.

In ST317, controlling section 141 of RNC 140 which receives the "session start request", transmits a "notification" to UE 150 and reports to UE 150 a start of multicast packet communication.

MBMS data transmitting and receiving section 153 of UE 150 decides whether or not the TMGI included in the received "notification" matches the TMGI stored in information storing section 152, and, when they match, MBMS data transmitting and receiving section 153 starts receiving MBMS data.

Here, if BM-SC 110 transmits the MBMS data received from the content provider, selecting sections 122, 132 and 142 of GGSN 120, SGSN 130 and RNC 140 transfer only the MBMS data of the corresponding RTP port number based on the specified TMGI and group ID.

By this means, in GGSN 120, SGSN 130 and RNC 140, it is possible to reduce unnecessary MBMS data transfer to the radio link and network.

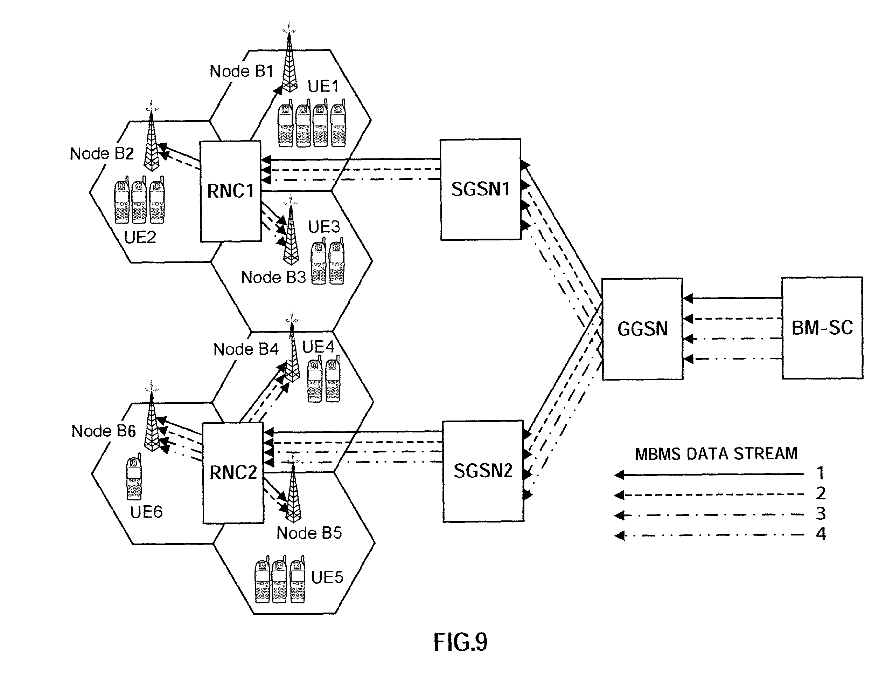

The MBMS data stream flow in such a multicast packet communication system will be described in detail using FIG.9. In FIG.9, it is assumed that one service is formed with four MBMS data streams. Further, it is assumed that UE 1 requests MBMS data stream 1, UE 2 requests MBMS data streams 1 and 2, and UE 3 requests MBMS data streams 1 to 3. Furthermore, it is assumed that UE 4 requests MBMS data streams 1 to 3, UE 5 requests MBMS data streams 1 and 2, and UE 6 requests MBMS data streams 1 to 4.

The four MBMS data streams transmitted from BM-SC 110 are received at SGSNs 1 and 2 via GGSN 120. In SGSN 1, UE 3 out of UEs 1 to 3 under SGSN 1 requests reception of MBMS data streams 1 to 3, and therefore SGSN 1 selects MBMS data streams 1 to 3 and transfers these MBMS data streams to RNC 1.

Further, in SGSN 2, UE 6 out of UEs 4 to 6 under SGSN 2 requests reception of MBMS data streams 1 to 4, and therefore SGSN 2 transfers all of MBMS data streams 1 to 4 to RNC 2.

RNC 1 transfers MBMS data stream 1 to Node B 1 under which UE 1 requests reception of MBMS data stream 1, transfers MBMS data streams 1 and 2 to Node B 2 under which UE 2 requests reception of MBMS data streams 1 and 2, and transfers MBMS data streams 1 to 3 to Node B 3 under which UE 3 requests reception of MBMS data streams 1 to 3.

Further, RNC 2 transfers MBMS data streams 1 to 3 to Node B 4 under which UE 4 requests reception of MBMS data streams 1 to 3, transfers MBMS data streams 1 and 2 to Node B 5 under which UE 5 requests reception of MBMS data streams 1 and 2, and transfers MBMS data streams 1 to 4 to Node B 6 under which UE 6 requests reception of MBMS data streams 1 to 4.

In this way, according to Embodiment 1, in each of relay apparatuses GGSN, SGSN and RNC, a service identifier that identifies the service requested by the UE, group ID that identifies the radio access scheme of the UE and the RTP port number corresponding to the group ID, are stored in association with one another. By this means, even when one service is formed with a plurality of MBMS data streams, each relay station can transfer only an MBMS data stream corresponding to the request from the UE under the relay station. Therefore, unnecessary MBMS data distribution to the radio link and network can be avoided, so that it is possible to efficiently use radio link and network resources.

In this embodiment, a correspondence relationship between the group ID and the RTP port number are reported using a "session start request". However, the present invention is not limited to this, and it is also possible to inquiry as to the correspondence relationship between the group ID and the RTP port number using a "create MBMS context request" and "MBMS registration request" and report the relationship using an "MBMS registration response" and "create MBMS context response".

Further, in this embodiment, a group ID is reported using a "service announcement", "joining message", "MBMS notification request" and "MBMS UE linking request". However, the present invention is not limited to this, and it is also possible to set a group ID that identifies the radio access scheme of base stations under RNC, SGSN and GGSN in advance and report the correspondence relationship between the group ID and the RTP port number using a "session start request".

### (Embodiment 2)

In Embodiment 1, a case of associating an IP multicast address with a group ID at each relay apparatus and storing an RTP port number corresponding to the group ID has been described. By contrast with this, in Embodiment 2 of the present invention, a case of storing an IP multicast address and an RTP port number in association with each other will be described. The configuration of the multicast packet communication system is the same as in FIG.2 and therefore will be described using FIG.2.

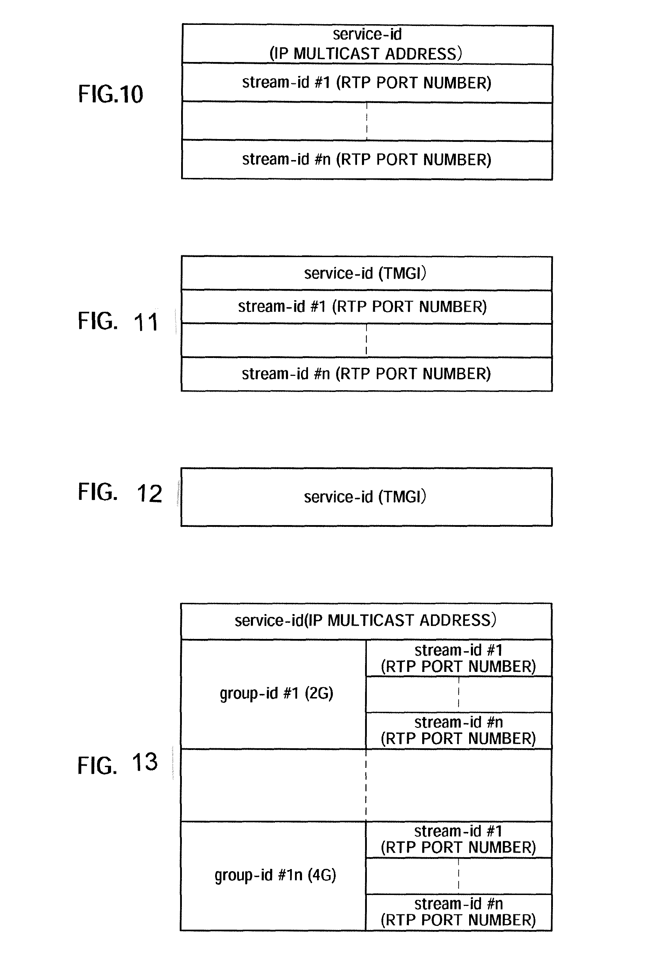

As shown in FIG.10, BM-SC 110 transmits to UE 150 a "service announcement" associating an IP multicast address with an RTP port number.

As shown in FIG.10, UE 150 transmits to GGSN 120 a "joining message" associating an IP multicast address which UE 150 desires to receive, with RTP port numbers specifying MBMS data streams.

As shown in FIG.10, GGSN 120 transmits to SGSN 130 an "MBMS notification request" associating an IP multicast address which UE 150 desires to receive, with RTP port numbers specifying MBMS data streams.

As shown in FIG.11, SGSN 130 transmits to RNC 140 an "MBMS UE linking request" associating the TMGI which UE 150 desires to receive, withRTPport numbers specifying MBMS data streams.

The relay apparatuses of GGSN 120, SGSN 130 and RNC 140 store the correspondence relationships included in the received control signals and sequentially transfer "session start requests" shown in FIG.12 transmitted from MB-SC 110.

In this way, according to Embodiment 2, each relay apparatus GGSN, SGSN and RNC stores a service identifier that identifies the service requested by the UE and the RTP port number corresponding to that service identifier in association with one another. By this means, even when one service is formed with a plurality of MBMS data streams, each relay apparatus can transfer only the MBMS data stream corresponding to the request from the UE under the relay apparatus. Accordingly, unnecessary MBMS data distribution to the radio link and network can be avoided, so that it is possible to use radio link and network resources efficiently.

In addition, it is also possible to use combination of an IP multicast address and the RTP port number of each group ID as shown in FIG.13 as a "service announcement", instead of the combination of an IP multicast address and RTP port numbers shown in FIG.10.

In the above embodiments, a case has been described as an example where the present invention is configured by hardware. However, the present invention can also be realized by software.

Each function block employed in the description of each of the above embodiments may typically be implemented as an LSI constituted by an integrated circuit . These may be individual chips or partially or totally contained on a single chip. "LSI" is adopted here, but this may also be referred to as "IC", "system LSI", "super LSI", or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese Patent Application No . 2005-157451, filed on May 30, 2005, the entire content of which is expressly incorporated by reference herein.

### Industrial Applicability

The packet relay apparatus, multicast packet communication system and multicast packet communication method according to the present invention enable efficient use of radio link and network resources, and can be applied to a system providing MBMS where one service is formed with a plurality of MBMS data streams.

## Claims

1. A packet relay apparatus comprising:
a controlling section that receives a stream identifier that identifies a data stream requested from a communication terminal apparatus performing multicast packet communication; and
a selecting section that receives data streams transmitted from an upper apparatus, selects the data stream requested by the communication terminal apparatus out of the received data streams based on the stream identifier, and transfers the selected data stream to a lower apparatus.

2. The packet relay apparatus according to claim 1, wherein the selecting section stores a service identifier that identifies a service requested by the communication terminal apparatus, an identifier that identifies capabilities of the communication terminal apparatus and the stream identifier in association with one another.

3. The packet relay apparatus according to claim 2, wherein the capabilities of the communication terminal apparatus are identified by a radio access scheme.

4. The packet relay apparatus according to claim 2, wherein the capabilities of the communication terminal apparatus are identified by a function of playing back a video stream or audio stream, or by a radio access function of the communication terminal apparatus.

5. The packet relay apparatus according to claim 1, wherein the selecting section stores a service identifier that identifies a service requested by the communication terminal apparatus and the stream identifier in association with each other.

6. A multicast packet communication system comprising :
a communication terminal apparatus that requests a desired service using a service identifier that identifies a service and a stream identifier that identifies a data stream; and
a packet relay apparatus that transfers a data stream requested by the communication terminal apparatus to a lower apparatus based on the stream identifier, out of a plurality of data streams transmitted from an upper apparatus.

7. A multicast packet communication method comprising the steps of:
requesting a desired service from a communication terminal apparatus using a service identifier that identifies a service and a stream identifier that identifies a data stream; and
transferring from a packet relay apparatus to a lower apparatus a data stream requested by the communication terminal apparatus out of a plurality of data streams transmitted from an upper apparatus.
